# EUROPÄISCHE PATENTSCHRIFT

(11) **EP 4 264 101 B1**
(45) Veröffentlichungstag und Bekanntmachung des Hinweises auf die Patenterteilung: **05.08.2026**
(21) Anmeldenummer: 20830334.7
(22) Anmeldetag: 17.12.2020
(51) Int. Cl.: F16L 17/04, F16L 21/00, F16L 21/06

(54) **DEFINIERT VERSPANNBARE ROHRKUPPLUNG**
PIPE COUPLING WHICH CAN BE CLAMPED IN A DEFINED MANNER
RACCORD DE TUYAUX SERRABLE DE MANIÈRE DÉFINIE

(43) Veröffentlichungstag der Anmeldung: 25.10.2023
(73) Patentinhaber: Straub Werke AG, 7323 Wangs (CH)
(72) Erfinder: MANNHART, Hubert, 7320 Sargans (CH)
(74) Vertreter: PPR AG
(86) Internationale Anmeldenummer: PCT/IB2020/062126
(87) Internationale Veröffentlichungsnummer: WO 2022/130000

(56) Entgegenhaltungen:
- WO-A1-2009/044328
- WO-A1-2018/142102
- US-B1- 8 113 242

## Beschreibung

Die Erfindung betrifft eine Rohrkupplung zum Verbinden zweier Rohre beziehungsweise eine Rohrschelle zum Abdichten eines defekten Rohrs. I

Gattungsgemässe Rohrkupplungen im Sinne der vorliegenden Erfindung sind beispielsweise in WO 02/086 370 oder in US 6 328 352 gezeigt. Diese sind speziell zur Verbindung oder Reparatur von Rohren ausgebildet, welche mit hohen Drücken, Temperaturen, etc. belastet sind und werden oft in harschen Umgebungen eingesetzt. Entsprechend sind diese Rohrkupplungen ausgebildet mit einem, um die zu verbindenden oder um das zu reparierende Rohre spannbares, flexiblen Schellenband, welches aus verschiedenen Materialien, vorzugsweise aus korrosionsbeständigem Metall ausgebildet ist. Mit einer Spanneinrichtung wird bei der Montage der Rohrschelle eine Reduktion eines Innendurchmessers des Schellenbandes bewirkt, und dabei eine Dichteinlage an einer Innenseite des Schellenbands mittels der Spanneinrichtung unter Druck gesetzt. Mit diesem Verspannen der Rohrkupplung werden radiale Spann-Druckkräften auf das oder die Rohre erzeugt und die Dichteinlage unter Druck gesetzt. Damit wird eine Abdichtung nach Aussen und/oder eine Verbindung der Rohre erzielt. Mit dem Begriff Rohrkupplung ist im Weiteren sowohl eine derartige ausgebildete Rohrkupplung zum Verbinden zweier Rohre oder anderer rohrförmigen Elemente wie Stutzen, Hülsen, etc. als auch eine derartige ausgebildete Rohrschelle zum Abdichten eines defekten rohrförmigen Elements gemeint.

Um eine korrekte Montage und einen sicheren Betrieb der Rohrkupplung zu gewährleisten, muss bei der Montage der Spanndruck der Rohrkupplung korrekt eingestellt werden. Im Stand der Technik erfolgt dies mit einem Drehmomentschlüssel, über welchen ein definiertes Drehmoment an der Spanneinrichtung eingestellt wird.

Die WO 09/044 328 schlägt dabei zusätzlich vor, dass ein mechanischer Indikator an der Rohrkupplung von einer ersten in eine zweite Stellung umschlägt, wenn die Spannkraft in der Rohrschelle einen fest vorgebenden Wert überschreitet. Dieser Indikator ist mit einem Bolzen und einer Tellerfeder ausgebildet und bietet an einem vorgegebenen Ort an der Rohrkupplung eine visuelle Anzeige ob eine bestimmte Verspannung erfolgte oder nicht.

Nachteilig an dieser bekannten Lösung ist z.B., dass der mechanische Indikator oft an einer ungünstigen, schlecht einsehbaren Stelle zu liegen kommt. Auch in Umgebungen mit schlechtem Licht, Verschmutzungen, etc. ist dieser Indikator oft nicht eindeutig ablesbar. Auch kann es Fälle geben, in denen dieser Indikator nicht zuverlässig funktioniert (verklemmt) oder verschmutzt und/oder von aussen beschädigt wird.

Auch ist der Indikator auf einen speziellen Spanndruck ausgelegt. Wird dieser Spanndruck z.B. deutlich überschritten, gibt es dafür keine Anzeige. Zu hoher Spanndruck kann aber für die Dichteinlage und/oder das Spannband/Schellenband schädlich sein. Ein tatsächlich benötigter Spanndruck kann im Einzelfall aber unterschiedlich von dem speziellen Spanndruck sein, auf den der Indikator ausgelegt ist, z.B. je nach Grösse oder Type der Rohrkupplung und/oder basierend auf Umgebungsbedingungen wie Art oder Material der Rohre, Temperatur oder Druck in den Rohren, etc. Der benötigter Spanndruck ist dabei zwar meist im Voraus bestimm- oder berechenbar, jedoch wird dann eine Vielzahl von unterschiedlichen Indikatoren für unterschiedliche Anwendungen benötigt. Da der Indikator andererseits fester Teil der Rohrkupplung ist, ist ein grosses Sortiment an verschiedenen Rohrkupplungen mit jeweils lediglich unterschiedlichen Indikatoren nötig.

Ein weiteres Problem kann dabei auch sein, dass es - z.B. in einem Fehlerfall - später nicht nachweisbar ist, ob eine Rohrkupplung bei der Montage korrekt verspannt war oder nicht. Im Fehlerfall kann nämlich die Anzeige des Indikators verloren gehen. Somit bleibt es z.B. bei einem Versicherungsfall oder dergleichen unklar, ob dieser auf eine fehlerhafte Rohrkupplung, eine fehlerhafte Montage durch unqualifizierte Arbeiter oder auf andere Einflüsse zurückzuführen ist.

Aufgabe der vorliegenden Erfindung ist es somit, eine Vorrichtung zu schaffen, welche die vorgenannten Nachteile nicht aufweist und insbesondere eine verbesserte Rohrkupplung bereitzustellen, welche zuverlässig und vielfältig einsetzbar ist. Eine spezielle Aufgabe ist dabei ein korrektes Verspannen der Rohrkupplung bei der Montage sicherzustellen. Vorzugsweise soll dabei das korrekte Verspannen auch ohne einen speziell für dieses Drehmoment ausgelegten Drehmomentschlüssel möglich sei. Auch eine Nachweisbarkeit, Überprüfbarkeit und/oder Wartbarkeit der Verspannung sind mit besonderen Ausführungen der vorliegenden Erfindung erzielbar.

Die Aufgaben werden durch die Merkmale des unabhängigen Anspruchs gelöst. Vorteilhafte Weiterbildungen sind in den Figuren, der zugehörigen Beschreibung und in den abhängigen Patentansprüchen dargelegt.

Gemäss der Erfindung wird eine Rohrkupplung zum Verbinden zweier Rohre bereitgestellt. Diese kann alternativ in gleicher Bauweise auch als eine Rohrschelle zum Abdichten eines defekten Rohrs genutzt werden - wenn also strenggenommen nur ein Rohr vorliegt. Die Rohrkupplung bzw. Rohrschelle umfasst dabei ein um das oder die Rohre spannbares, flexibles Schellenband, sowie einen Spanneinrichtung zur Reduktion eines Innendurchmessers des Schellenbandes.

Das Schellenband kann bei insbesondere aus Metall sein, zum Beispiel als ein flexibles, korrosionsbeständiges Blechteil, welches in montiertem Zustand als eine Art Manschette das Rohr oder die Rohre zumindest im Wesentlichen umschliesst. Das Schellenband kann dabei einen Längsschlitz aufweisen, welcher sich beim Verspannen zusammenzieht. Der Längsschlitz kann dabei auch von einer (Metall-) Einlage unter dem Schellenband im Bereich des Längsschlitzes nach Aussen geschlossen sein, oder mit einer verschränkten Ausgestaltung des Schellenbandes über einen Winkel von mehr als 360° den Längsschlitz schliessen. Unter Längsschlitz sind hier beliebige Schlitze zu verstehen, auch solche, die nicht genau in Längsrichtung eines zu umschliessenden Rohres sondern etwa schräg dazu liegen.

Vorteilhaft kann die Rohrkupplung dabei mit zumindest zwei Spannregionen entlang der Axialrichtung der Rohre ausgebildet sein, sodass jeweils ein Endbereich der Rohrkupplung mit jeweils einem der Rohre verspannt werden kann. Beispielsweise mit zumindest einer, vorteilhaft mit zumindest zwei oder optional auch mit mehreren Spannschrauben, welche axial entlang des Längsschlitzes angeordnet sind, speziell jeweils im eine Spannschraube im Endbereich - das ist der Bereich in der Nähe des axialen Endes der Rohrkupplung.

Die Rohrkupplung weist weiters - wie an sich bekannt - eine gummielastische Dichteinlage an der Innenseite des Schellenbands auf, welche mittels der Spanneinrichtung zum Erzeugen von radialen Spann-Druckkräften auf das oder die Rohre unter Druck setzbar ist. Damit können durch das Spannen des Schellenbandes mittels der Spanneinrichtung Druckkräfte auf eine gummielastisch verformbare Masse als Dichteinlage und weiter auf das Rohr aufgebracht werden, sodass die Rohrkupplung in abdichtender Weise mit dem Rohr verspannt und dabei das Rohr insbesondere auch fixiert wird.

Beispielsweise kann die Rohrkupplung mit zumindest einem, zumindest bereichsweise im Schellenband angeordneten Innengehäuse ausgebildet sein. Mit einem Spannmechanismus kann ein Verspannen des Gehäuses erfolgen, etwa indem der Spannmechanismus einen ersten Bolzen und einen zweiten Bolzen aufweist, welche sich jeweils an einander gegenüberliegenden Bereichen Längsschlitzes in umgebogenen Laschen des Gehäuses eingebracht sind, und mit zumindest einem, den ersten Bolzen quer durchsetzenden Spannmittel, z.B. einer Spannschraube verspannbar sind. Insbesondre können dabei in einer an sich bekannten Ausführungsform zumindest zwei Spannschrauben, vorgesehen sein, speziell jeweils mindestens eine Spannschraube an einem Ende der Kupplung für jeweils eines der Rohre, bzw. für die beiden Enden der Schelle auf beiden Seiten der abzudichtenden Stelle am Rohr.

Entsprechend der Erfindung ist ein elektrischer Drucksensor zwischen der Dichteinlage und dem Schellenband angeordnet. Zwischen Dichteinlage und Schellenband ist dabei breit auszulegen. Der Drucksensor kann auch eingebettet sein in der Dichteinlage, entscheidend ist jedoch, dass am Drucksensor ein Verformungsdruck in der Dichteinlage, der durch das Schellenband erzeugt wird, gemessen werden kann. Dieser Drucksensor ist ausgebildet, um einen Wert eines mechanischen Spannungszustands in oder an der Dichteinlage zu ermitteln. Insbesondere handelt es sich um einen elektrischen oder elektronischen Sensor, der mit der Dichteinlage in Kontakt steht, und welcher ausgebildet ist, einen Wert eines mechanischen Spannungszustands zu ermitteln, welcher durch den Spann-Druck beim Verspannen der Spanneinrichtung verursacht wird. Dieser Sensor kann dabei speziell zumindest teilweise in der Dichteinlage eingebettet oder innenseitig am Schellenband angebracht sein. Der Drucksensor stellt dabei einen elektronisch auslesbaren Wert bereit, welcher abhängig von einem Druck bzw. einer Kraft ist.

Die erfindungsgemässe Rohrkupplung weist weiter eine Schnittstelle vom Drucksensor zu einer externen Auswerteeinheit auf. Diese Auswerteeinheit ist ausgebildet, auf Basis des Werts des mechanischen Spannungszustands eine Information zur Bedienung der Spanneinrichtung bereitzustellen, insbesondere eine Information zur Herstellung eines Sollwerts der Druckkräfte bereitzustellen. Die Schnittstelle umfasst dabei ein Kommunikationsmodul, welches eine kabellose Kommunikation der durch den Drucksensor gemessenen Werte zur Auswerteeinheit bereitstellt. Damit kann, insbesondere auch kontaktlos und berührungslos, eine definierte Verspannung der Rohrkupplung mittels der Spanneinrichtung erfolgen, beispielsweise um eine korrekte Montage, Dichtheit, Druckbelastbarkeit, Betriebssicherheit, etc. der Rohrkupplung sicherzustellen und/oder zu dokumentieren - speziell auch ohne dabei eine Drehmomentschlüssel oder dergleichen zu benötigen. Der Wert kann dabei vorzugsweise zumindest annähernd in Echtzeit von der Auswerteeinheit bereitgestellt und/oder gespeichert werden. Optional oder zusätzlich kann der Wert auch als Folge oder Kurve des Werts, z.B. über die Montagezeit der Rohrkupplung bereitgestellt und/oder gespeichert werden. Die externe Auswerteeinheit kann insbesondere eine rohrkupplungsexterne, mobile Auswerteeinheit, beispielsweise in Form eines mobilen Endgeräts sein. Der Sollwert der Druckkräfte kann insbesondere auch in der Rohrkupplung gespeichert sein, und ebenfalls über die Schnittstelle bereitgestellt werden oder bei der bereitgestellten Information über die Verspannung der Rohrkupplung als Referenzwert berücksichtigt werden. Damit können beispielsweise unterschiedliche Typen von Rohrkupplungen verspannt werden ohne dass der Benutzer Kenntnis über einen Soll-Spanndruck des jeweiligen Typs haben muss, da diese Information individuell von Rohrschelle bereitgestellt wird.

Bevorzugterweise sind die Schnittstelle und das Kommunikationsmodul ebenfalls zwischen der Dichteinlage und dem Schellenband angeordnet. Dabei ist vorzugsweise das Schellenband in einem Bereich des Kommunikationsmoduls für eine kabellose Kommunikation durch das Schellenband hindurch ausgestaltet, beispielsweise indem das Schellenband einen Wellenkanal in diesem Bereich aufweist. Der Wellenkanal ist in seiner einfachsten Ausbildungsform die Innenseite des Schellenbands, die seitlich wenigstens teilweise ins Freie mündet. Es kann aber auch das Schellenband eine Ausnehmung aufweisen, z.B. mit einem Schlitz oder einer Bohrung, damit elektromagnetische Wellen gut durch das Schellenband abgestrahlt werden können, selbst wenn das Schellenband aus Metall besteht. Insbesondere kann die kabellose Kommunikation als elektromagnetische oder magnetische Nahfeldkommunikation erfolgen oder optional auch als eine passive Analogwertübertragung mittels zur Übertragung gekoppelter Spulen zwischen Rohrkupplung und Auswerteeinheit. In einer alternativen Ausführung kann auch eine zumindest partielle Durchführung für eine Antenne oder Sensorsignale an die Aussenfläche des Schellenbands erfolgen.

Vorzugsweise ist die Schnittstelle mit einem Energieversorgungsmodul derart ausgebildet, das bei einem Auslesen des Werts aus dem Drucksensor mittels Auswerteeinheit, das Energieversorgungsmodul durch ein EnergieEinspeisemodul der externen Auswerteeinheit mit elektromagnetischer bzw. elektrischer Energie versorgbar ist, vorzugsweise mittels kabelloser, induktiver, kapazitiver, bzw. elektromagnetischer Energieübertragung von der Auswerteeinheit zum Kommunikationsmodul.

Bevorzugterweise ist die Schnittstelle mit einem RFID- oder NFC-Chip bzw. - Transponder ausgerüstet, welcher mit dem Drucksensor verbunden und ebenso innerhalb des Schellenbands angebracht ist.

Vorzugsweise ist die externen Auswerteeinheit als ein tragbares, batteriebetriebenes Gerät ausgebildet, beispielsweise als Smartphone, Tablet-PC oder Laptop mit jeweils entsprechendem Computerprogrammprodukt zur Verarbeitung des Werts des mechanischen Spannungszustands aus dem Drucksensor und darauf basierender Bereitstellung der Information über ein Interface zur geführten Bedienung der Spanneinrichtung zur Herstellung des Sollwerts der Druckkräfte. Insbesondere ein Interface mit einem optischen, akustischen oder haptischen Indikator für den mechanischen Spannungszustand z.B. mit einer numerischen oder graphischen Anzeige für den mechanischen Spannungszustand auf einem Display.

Die Rohrkupplung kann dabei auch eine Halterung zur temporären Anbringung der Auswerteeinheit oder eines Transponders der Auswerteeinheit in einem Bereich des Kommunikationsmoduls an der Rohrkupplung aufweise, bzw. kann eine derartige Halterung als Zwischenelement zur Anbringung an der Rohrkupplung bereitgestellt werden, z.B. mit Magneten, Bändern, Feder- oder Klips-Halterungen, Manschetten, Klettverschluss-Schlaufen, ...

Bevorzugterweise weist in einer Ausführungsform die Schnittstelle bzw. die Kommunikationseinheit einen Energiespeicher und/oder ein Aktivierungselement auf, welche ausgebildet sind, nach einer Aktivierung des Aktivierungselements bei einer Montage der Rohrkupplung beziehungsweise Rohrschelle wenigstens temporär -z.B. für wenige Minuten oder Stunden - während und/oder nach der Montage eine Energieversorgung der Schnittstelle und/oder des Drucksensors bereitzustellen. Vorzugsweise ist das Aktivierungselement - alternativ zu einer Aktivierung durch den Monteur, etwa durch Herausziehen eines Isolierstreifens, etc. - durch einen Vorgang bei der Montage automatisch auslösbar, insbesondere durch eine Betätigung der Spanneinrichtung und/oder durch ein Aufbringen von Druckkräften auf die Dichteinlage oder den Drucksensor. Die Auswerteeinheit ist u.U. ein Mobiltelefon mit NF-Kommunikationsmodul.

Bevorzugterweise ist der Drucksensor ausgebildet als ein Foliendrucksensor, oder ein Piezo-Drucksensor, oder ein Sensor nach einem DMS-Messprinzip, oder ein Sensor nach dem Kohlegrieß-Prinzip, oder nach einem anderen Messprinzip mit welchem ein Wert einer Kraft oder eines Drucks in analoger Weise als elektrisches Signal ermittelbar ist. Beispielsweise kann ein Widerstands-Sensor z.B. als ein resistiv messender Force Sensing Resistor (FSR) ausgebildet sein. Ein Drucksensor kann z.B. ausgebildet sein mit einer ersten und einer zweiten, elektrisch kontaktierten Metallschicht, deren Abstand Druckabhängig variiert. In einer Ausführung kann dabei auch ein Teil der Dichteinlage zwischen den Metallschichten eine Abstandsänderung unter Druck bereitstellen. Zwischen den Metallschichten kann z.B. eine Kapazitätswert ermittelt werden oder es kann dazwischen eine resistive Flüssigkeiten oder ein Pulver eingebracht sein, deren Überganswiederstand unter Druck sinkt. Bei einem Piezo-Sensor kann unter anderem z.B. eine Verschiebung der Eigenfrequenzverschiebung durch mechanische Verspannung gemessen werden. Bei resistiven Sensoren kann auch eine Längen- oder Querschnittsveränderung eines elektrischen Leiters unter Krafteinwirkung gemessen werden.

Vorzugsweise weist der Drucksensor einen Messbereich für Druckkräfte in einem Bereich auf, der durch Anzugskräfte an der Spanneinrichtung in der Höhe von ca. 0 bis 200Nm erzeugt wird. Es lassen sich dabei aus den Drehmomenten spezifischen Anpresswerte (primär abhängig von Drehmoment und Rohrkupplungsdurchmesser) errechnen. Bei gleichen Drehmomenten aber unterschiedlichen Durchmessern sind die theoretischen Anpresswerte verschieden. Entsprechend der vorliegenden Erfindung kann stets ein tatsächlicher Anpresswert mit dem Drucksensor ermittelt werden, ohne dabei den Durchmesser berücksichtigen zu müssen. Mit dem Wert des Sensors ist es aber auch möglich bedarfsgerecht spezifische Anpresswerte einzustellen, beispielsweise abhängig von der Anwendung, Type und Material der Rohre, maximal auftretende Drücke im Rohr, Temperaturbereiche, ...

Im Prinzip genügt es, wenn die Auswerteeinheit eine Software aufweist, die einerseits den gemessenen Wert am Drucksensor, andererseits die jeweiligen Umstände des Rohrkupplungsaufbaus und des konkreten Einsatzes berücksichtigt. Solche Daten können über ein Interface eingebbar sein. Ist die Auswerteeinheit ein Mobiltelefon, dann kann die Eingabe über die normale Tastatur/Bildschirm des Mobiltelefons erfolgen.

Bevorzugterweise weist der Drucksensor, die Schnittstelle oder die Kommunikationseinheit einen zusätzlichen Temperatursensor auf, welcher ausgebildet ist, den gemessenen Druck-Wert entsprechend einer vorliegend gemessenen Temperatur zu normieren/kompensieren.

Vorzugsweise ist der Drucksensor in einem Winkelbereich des Schellenbands angeordnet, welcher aussenhalb von zumindest +/-30 Grad um die Spanneinrichtung angeordnet ist, vorzugsweise im Wesentlichen 120° gegenüber der Spanneinrichtung. Insbesondere kann der Drucksensor dabei in einem Bereich der schlechtesten Verspannung der Rohrkupplung angeordnet sein, also speziell nicht in einem Bereich auf den sich der Spanndruck geometrie- bzw. funktionsbedingt am stärksten verteilt, sondern in einem Bereich in dem sich der Spanndruck am schwächsten aufbaut, und welcher daher als Referenz für eine korrekte und sichere Verspannung der Kupplung zur Erreichung der erforderlichen Dichtigkeit oder Belastbarkeit relevant ist. Ein vorteilhafter Bereich zur Platzierung von einem oder mehreren der Drucksensoren kann spezifisch für eine Ausgestaltung und/oder Grösse der Rohrkupplung durch Versuche ermittelt werden - insbesondre anhand hier beschriebener Kriterien.

Bevorzugterweise sind mehr als ein Drucksensor zwischen Dichteinlage und dem Schellenband angeordnet, wobei vorzugsweise entlang einer Axialrichtung der Rohrkupplung (bzw. in Richtung des Längsschlitzes im Schellenbands) jeweils zumindest ein Drucksensor in einem Endbereich der Rohrkupplung - also in axialer Längsrichtung der Rohre - angeordnet. Insbesondere kann auch jeweils zumindest ein Drucksensor jeweils in einem, einer Spannschrauben der Spanneinrichtung zugeordneten Längen-Bereich angeordnet sein. Damit kann z.B. auch ermittelt werden welche der Rohrkupplungsseiten oder welche der Spannschrauben mehr oder weniger verspannt werden muss im innerhalb eines Sollwertbereichs des Spanndrucks zu liegen. Dabei kann jeder Drucksensor für sich oder alternativ auch mehrere Drucksensoren gemeinsam ausgewertet werden und als separate oder kombinierte Werte bereitgestellt werden. Beispielsweise kann bei einer Anordnung von mehreren Drucksensoren entlang des Umfangs des Schellenbands ein Minimum des Spanndrucks über alle Drucksensoren gesehen als Kriterium für eine korrekte Verspannung herangezogen werden. Alternativ zu einer Einzelmessung jedes der Drucksensoren können auch mehrere oder alle Drucksensoren gemeinsam ausgewertete werden, z.B. in Form einer elektrischen Serien- oder Parallelschaltung der Drucksensoren.

Vorzugsweise weist der Drucksensor, die Schnittstelle und/oder die Kommunikationseinheit eine für die Rohrkupplung beziehungsweise Rohrschelle eindeutige, elektronisch auslesbare Kennung auf. Die Kennung kann z.B. eine Seriennummer, Chip-ID, eine digitale Signatur, eine Hardware- oder Software-ID, eine (MAC-) Adresse der Kommunikationsschnittstelle, ein Produktionsdatum oder -code, etc. sein, welche eine digitale Identifikation einer individuellen Rohrkupplung und/oder eines Typs der Rohrkupplung bereitstellt. Optional kann auch eine Prüfsumme oder eine Signatur der Werte von Drucksensor und/oder Rohrkupplungsidentifikation in einem Datenpakte berechnet und bereitgestellt werden. Insbesondere kann eine digitale Signierung und/oder Verschlüsselung der Werte vom Drucksensor auf Basis dieser Kennung oder eines von der Auswerteeinheit bereitgestellten Werts bereitgestellt werden, vorzugsweise in dezentrale Form, beispielsweise in Form einer Blockchain. Damit kann z.B. die Verspannung einer eindeutig definierten Rohrschelle gespeichert werden, vorzugsweise mit eindeutiger und vor nachträglicher Veränderung gesicherten Zuordnung zueinander, womit beispielsweise eine nachweisliche Dokumentation der Montage, eine Validierung der Verspannung bei Inspektion oder Instandhaltung, ein nachweislicher, Versicherungstechnischer oder rechtlich gültiger Nachweis einer korrekten, vorschriftsmäßigen Verspannung der Rohrkupplung, oder ähnliches bereitstellbar ist.

Zusätzliche oder alternativ kann die Rohrkupplung einen internen, nichtflüchtigen Speicher aufweisen, in welchem die Werte des Drucksensors oder davon abgeleitete Werte während der Montage gespeichert werden, vorzugsweise in einer zu einem späteren Zeitpunkt unveränderlicher Form, z.B. in der Kommunikationseinheit oder der Schnittstelle. Damit kann z.B. in einem Garantiefall auch bei ausgebauter Rohrkupplung überprüft werden, ob eine ordnungsgemässe Montage der Rohrkupplung erfolgte.

Bevorzugterweise wird der Wert aus dem Drucksensor und die Kennung mit wenigstens einer weiteren Information verknüpft bereitgestellt, welche weitere Information z.B. aus zumindest einer Angabe besteht wie: Ort, Zeit, Monteur und/oder Auswerteeinheit, und dass während einer Auslesung des Werts diese Daten vorzugsweise als ein eindeutig und reproduzierbar verknüpftes Datenpaket bereitgestellt werden. Das Bereitstellen kann dabei online und/oder offline erfolgen, als beispielsweise nur lokal angezeigt, lokal gespeichert, lokal zwischengespeichert, remote gespeichert, in einem Cloud- oder BIM- (Building Information Modeling) System abgelegt, etc.

In einer optionalen Ausführung als Variante der Erfindung kann der Drucksensor innerhalb des Schellenbands angeordnet sein und ein an der Aussenseite des Schellenbands ansteckbares Schnittstellen-Modul bereitgestellt sein, welches ein Funkmodul aufweist. Ein solches Schnittstellen-Modul kann dabei nicht nur fester Bestandteil der Rohrkupplung sein, sondern kann auch nur für die Montage an der jeweils zu montierenden Rohrkupplung anbringbar und dann wieder entfernbar sein, um bei der nächsten Rohrkupplung benutzt zu werden. Auch können unterschiedliche Schnittstellen-Module bereitgestellt werden, z.B. für unterschiedliche Anbindungen und Kommunikations-Protokolle, Feldbussanbindungen, etc. Beispielsweise als eine Rohrkupplung dadurch gekennzeichnet, dass die Schnittstelle mit zumindest zwei von ausserhalb der Rohrschelle kontaktierbaren, mit dem Drucksensor verbundenen elektrischen Kontakten ausgebildet ist. Speziell kann dies als ein System mit einer Rohrkupplung und mit einem an der Rohrkupplung anbringbaren Auswertemodul ausgebildet sein, welches Auswertemodul zumindest eine Batterie und ein Funk-Modul (Bluetooth, WLAN, ZigBee, etc.) aufweist und über die elektrischen Kontakte eine Erfassung sowie eine kabellose Übertragung zu einer externen Auswerteeinheit und/oder eine lokale Anzeige des mechanischen Spannungszustands bereitstellt. Alternativ auch als ein System mit einem an der drucksensorbestückten Rohrschelle anbringbaren Feldbus-Modul, welches eine kabelgebundene oder kabellose Feldbusschnittstelle aufweist und den Wert des mechanischen Spannungszustands auf einem Feldbus bereitstellt.

In analoger Weise betrifft die Erfindung auch ein Verfahren zum Bereitstellen einer Information über ein korrektes Verspannen einer Rohrkupplung, welches vorzugsweise durch die Rohrkupplung selbst bzw. in Zusammenwirkung mit einer Ausleseeinheit erfolgen kann, speziell während dem Montieren der Rohrkupplung, optional auch in einem Inspektions- oder Servicefall. Insbesondere kann dieses Verfahren mit einer Rohrkupplung beziehungsweise einer Rohrschelle wie hier beschreiben oder einer anderen, für das Verfahren entsprechend ausgebildeten Rohrkupplung durchgeführt werden.

Das erfindungsgemässe Verfahren umfasst dabei zumindest ein Messen eines elektrischen Werts aus dem Drucksensor, welcher Wert von einer mechanischen Spannung oder Kraftwirkung in oder an einer Dichtlage unter einem Schellenband der Rohrkupplung beziehungsweise Rohrschelle abhängt, Vorzugsweise häng der Wert dabei in bekannter Weise vom Spanndruck der Rohrkupplung ab. Das Messen kann dabei ein elektrisches Ermitteln eines kraft- oder druckabhängigen analogen Werts von Drucksensor umfassen, sowie bevorzugt ein Analog/Digital-Wandeln dieses Werts, allenfalls mit einem Verstärken und/oder Filtern des analogen und/oder digitalen Werts. Mit einem darauffolgenden Bereitstellen des Werts oder einem davon abgeleiteten Wert über eine Schnittstelle zu einem Kommunikationsmodul der Rohrkupplung erfolgt dabei ein kabelloses Kommunizieren des Werts oder eines davon abgeleiteten Werts zu einer rohrkupplungsexternen, mobilen Auswerteeinheit. Diese Auswerteeinheit ist ausgebildet, auf Basis des Werts oder eines davon abgeleiteten Werts eine Information zur Bedienung einer Spanneinrichtung der Rohrkupplung beziehungsweise Rohrschelle bereitzustellen. Mit dieser Information ist dann durch entsprechende Bedienung der Spanneinrichtung ein Sollwert eines Spanndrucks der Rohrkupplung beziehungsweise Rohrschelle erzielbar. Somit ist die Rohrkupplung korrekt verspannt, was z.B. bedeutet, dass sie mit diesem Sollwert einer vorgesehenen mechanischen Belastung (z.B. Rohrinnendruck, Temperaturschwankungen, mechanische Belastung der Rohrverbindung, etc.) standhalten kann.

Ein abgeleiteter Wert kann dabei z.B. nicht nur der direkte, rohe Drucksensorwert sein, sondern kann z.B. mit weiteren Grössen verrechnet sein, beispielsweise in Form einer Modellbildung, Kompensation von Umgebungsbedingungen wie Temperatur, Druck, etc., Linearisierungen, Umrechnungen in andere Grössen wie z.B. ein zugehöriges Drehmoment an der Spanneinrichtung, Zusammenführung von Werten mehrerer Drucksensoren, Signalfilterungen, etc.

Bevorzugterweise erfolgt im Rahmen des kabellosen Kommunizierens auch ein Empfangen von elektrischer Energie von der mobilen Auswerteeinheit hin zur Rohrkupplung, mit welcher Energie das Kommunikationsmodul zur Ermittlung und Übertragung des Werts versorgt wird. Damit muss die Rohrkupplung keine interne Energiequelle aufweisen, sondern es genügt allenfalls ein kleiner, temporärer Energiepuffer - z.B. in Form eines Kondensators.

Vorzugsweise erfolgt das kabellose Kommunizieren z.B. mit eine RFID- (radio-frequency identification) oder NFC- (near field communication) Transponder bzw. Chip in der Rohrkupplung. Insbesondere kann das Kommunizieren durch die Rohrkupplung selbst erfolgen, speziell z.B. von innerhalb des Schellenbands bzw. durch das Schellenband hindurch.

Bevorzugterweise erfolgt dabei ein Dokumentieren des Werts oder einem davon abgeleiteten Wert durch die Auswerteeinheit. Dieses kann insbesondere mit einem Erfassen von Umgebungsbedingungen wie einer elektronisch auslesbaren Kennung der Rohrkupplung beziehungsweise Rohrschelle erfolgen, speziell einer vorzugsweise eindeutigen Kennung vom Kommunikationsmodul, der Schnittstellte oder des Drucksensors. Zusätzlich oder alternativ kann eine solche Umgebungsbedingung auch zumindest einer Angabe von Temperatur, Zeit, Ort, Arbeiter, Auswerteeinheit, etc. umfassen. Das Kommunizieren, Dokumentieren und/oder Auswerten kann dabei auch mit einem Signieren und/oder Verschlüsseln der kommunizierten Daten erfolgen, insbesondere z.B. in einer Blockchain. Einer solche Blockchain kann z.B. als eine kontinuierlich erweiterbare Liste von Datensätzen (den sogenannten Blöcken) geführt werden, die mittels kryptographischer Verfahren miteinander verkettet sind. Jeder Block enthält dabei typischerweise zumindest einen kryptographisch sicheren Streuwert (Hash) des vorhergehenden Blocks und einen Zeitstempel zusätzlich zu den Werten vom Drucksensor, wobei eine rohrkupplungseindeutige Kennung mitverarbeitet wird.

Vorzugsweise kann das Verfahren auch ein erneutes kabelloses Kommunizieren und ein Validieren der Information über ein korrektes Verspannen einer Rohrkupplung beziehungsweise Rohrschelle im Rahmen einer Inspektion und/oder Instandhaltung der Rohrkupplung zu einem Zeitpunkt deutlich nach der ursprünglichen Montage der Rohrkupplung beziehungsweise der Rohrschelle umfassen. Optional kann auch während einer regulären Betriebsdauer der Rohrkupplung der Wert sporadisch, zyklisch oder kontinuierlich über das Kommunikationsmodul erfasst werden.

Ein solches erneutes Kommuniziere auch nach dem eigentlichen Montagevorgang kann dabei nicht nur erfolgen, um die Rohrkupplung selbst zu überwachen, sondern - als zusätzlicher oder alternativer Aspekt dieser Erfindung - auch um Betriebsparameter der Rohre bzw. in den Rohren mittels der Rohrkupplung zu überwachen. Beispielsweise kann damit nicht nur über den Wert vom Drucksensor auf einen aktuellen ein Innendruck der Rohre, oder über einen Temperatursensor auf eine aktuelle Innentemperatur in den Rohren geschlossen werden, sondern es können auch komplexere, davon abgeleitete Werte mittels der erfindungsgemässen Rohrkupplung ermittelt werden, wie z.B. eine Durchflussmenge über einen Differenzdruck, Leckagen über Druckabfälle, Schwingungen und Vibrationen anhand der Druckverläufe, etc. Die Erfindung betrifft ebenfalls ein korrespondierendes Computerprogrammprodukt gemäß Anspruch 15 mit Programmcode auf einem maschinenlesbaren Medium, welcher ausgebildet ist, eine Überwachung einer Verspannung der Spanneinrichtung einer Rohrkupplung beziehungsweise Rohrschelle, bereitzustellen. Ein solcher Programmcode kann dabei speziell auf einer vorzugsweise mobilen Auswerteeinheit zur Ausführung gelangen und zumindest ausführen:
- eine Herstellen einer kabellosen Kommunikationsverbindung zu einer Schnittstelle eines Drucksensors in der Rohrkupplung,
- eine Einlesen des Wert des mechanischen Spannungszustands in oder an einer Dichteinlage der Rohrkupplung vom Drucksensor, bzw. eines davon abgeleiteten Werts, und
- eine Ermitteln und Bereitstellen einer Information zur Bedienung einer Spanneinrichtung der Rohrkupplung anhand des Werts des mechanischen Spannungszustands oder des davon abgeleiteten Werts. Durch eine entsprechende Bedingung ist damit ein Sollwert oder Sollwertbereich des mechanischen Spannungszustands erzielbar.

Neben einer Firmware auf einem hierfür dezidiert vorgesehenen Gerät, kann das Computerprogrammprodukt auch als Software oder App für ein Smartphone, einen Tablet-PC, einer Smartwatch, einer AR- oder VR-Brille, etc. als Auswerteeinheit ausgebildet sein. Die Auswerteeinheit kann optional zumindest teilweise auch als ein Gateway, Router, Bridge, Switch oder Hub ausgebildet sein, welche die kabellose Kommunikation der Rohrkupplung, welche allenfalls nur über eine geringe Reichweite verfügt, auf ein anderes Kommunikations-System, -Protokoll und/oder Medium umsetzt, über welches dann die Bereitstellung der Information erfolgt.

Die Information zur Bedienung kann dabei speziell für einen menschlichen Bediener zur Bedienung Spanneinrichtung mittels eines Werkzeugs ausgebildet sein. Alternativ kann die Information auch zur automatischen Ansteuerung und/oder Konfiguration eines Elektrowerkzeuges direkt an dieses Elektrowerkzeug bereitgestellt werden - vorzugsweise ebenfalls kabellos und/oder mit der Auswerteeinheit als Teil des Elektrowerkzeugs. Beispielsweise kann die Information vom Drucksensor oder eine davon abgeleitete Information, wie z.B. erreichen eines Soll-Druckwerts einem Elektroschrauber bereitgestellt bzw. von diesem ausgelesen werden. Dieser Elektroschrauber kann dann, insbesondere automatisch, anhand der Information derart konfiguriert werden, dass ein Schraubvorgang gestoppt wird, wenn eine hinreichender/korrekter Spanndruck erreicht ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indizes geben funktionsgleiche oder ähnliche Bauteile an.

Es zeigen dabei:
- Fig. 1: eine erste Ausführungsform einer erfindungsgemässen Rohrkupplung im Querschnitt,
- Fig. 2: die erste Ausführungsform einer erfindungsgemässen Rohrkupplung im Teil-Längsschnitt und mit Auswerteeinheit,
- Fig. 3: eine zweite Ausführungsform einer erfindungsgemässen Rohrkupplung in perspektivischer Ansicht,
- Fig. 4: ein Teilschnitt einer ersten, zweiten und dritten Ausführungsform einer erfindungsgemässen Spanndruckmessung,
- Fig. 5: ein Beispiel einer erfindungsgemässen Verspannung einer dritten Ausführungsform einer erfindungsgemässen Rohrkupplung sowie eine kabellose Energieversorgung durch die Auswerteeinheit,
- Fig. 6: eine andere Ausführungsform einer Ausführungsform einer ersten Energieversorgung im Blockdiagramm,
- Fig. 7: eine vierten Ausführungsform einer erfindungsgemässen Rohrkupplung in perspektivischer Ansicht.

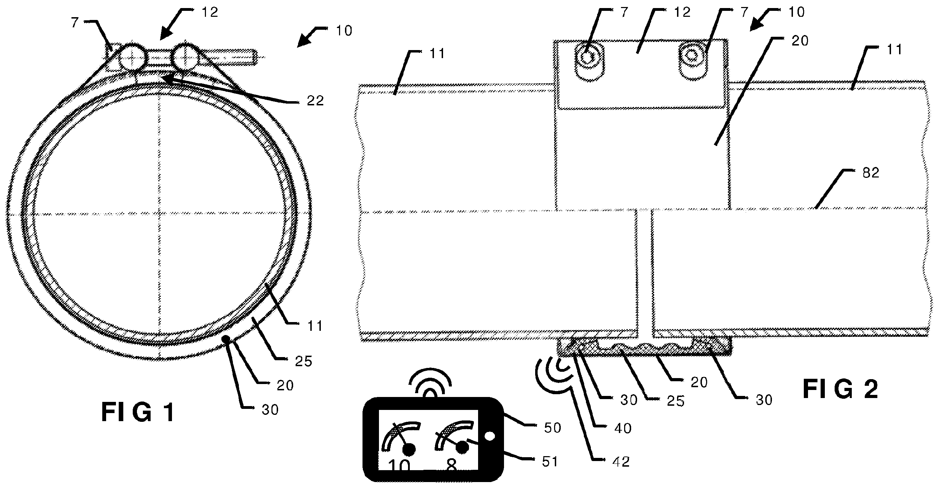

Fig. 1 zeigt ein Beispiel einer gattungsgemässen Rohrkupplung 10 in einer Schnittdarstellung orthogonal zur Richtung der zu verbindenden Rohre 11. Diese Rohrkupplung kann vorzugsweise axial auf die Rohre 11 aufgeschoben oder optional auch über die Rohre 11 übergestülpt und anschliessend verspannt werden. Ein flexibles, vorzugsweise aus korrosionsfreiem Metall hergestelltes Schellenband 20 weist dabei im Bereich eines Längsschlitzes 22 eine Spanneinrichtung 12 auf. Bei einem Spannen dieser Spanneinrichtung 12, beispielsweise mit Spannschrauben 7, verringert sich der Innendurchmesser des Schellenbandes 20. Dabei wird ein Spanndruck auf eine Dichteinlage 25 der Rohrkupplung 10 ausgeübt, welche zwischen dem Schellenband 20 und dem Rohr 11 befindet. Die verformbare, gummielastische Masse der Dichteinlage 25 wird dabei unter Druck gesetzt und geht stellt eine form- und kraftschlüssige Verbindung zum Rohr bereit indem die gummielastische Masse durch den Spanndruck gequetscht wird. Im Bereich des Längsschlitzes 22 kann dabei eine Metall-Einlage einen Austritt der Dichteinlage 25 im Bereich der Spanneinrichtung 12 verhindern.

Erfindungsgemäss ist dabei zwischen dem Schellenband 20 und der Dichteinlage 25 zumindest ein elektrischer Drucksensor 30 vorhanden. Mit diesem ist der aktuelle Spanndruck der Rohrkupplung 10, also speziell ein Wert des mechanischen Spannungszustands in oder an der Dichteinlage 25 bestimmbar. Dieser Drucksensor 30 ist mit einer Schnittstelle 40 zu einer - in Bezug auf die Rohrkupplung 10 - externen Auswerteeinheit 50 ausgerüstet bzw. ist der Drucksensor 30 mit dieser Schnittstelle 40 elektrisch verbunden. Die in dieser Figur nicht ersichtliche Schnittstelle 40 der Rohrkupplung 10 stellt dabei basierend auf dem Wert des Drucksensors 30 eine Information zur Bedienung der Spanneinrichtung 12 bereit, um einen gewünschten Sollwert des Spanndrucks der Rohrschelle 10 zu erzielen. Dieses erfolgt über ein Kommunikationsmodul 42 der Schnittstelle 40, welches eine kabellose oder kontaktlose Kommunikation der Werte des Drucksensors - oder eines davon abgeleiteten Werts - an die externe Auswerteeinheit bereitstellt.

Fig. 2 stellt die Rohrkupplung 10 von Fig. 1 in einer zugehörigen Längsansicht in Form einer partiellen Schnittdarstellung dar. Dabei ist im oberen Bereich das Schellenband 20 um die beiden Rohrenden 11 mit der Spaneinrichtung 12 dargestellt. Die Spanneinrichtung 12 ist hier - in axialer Richtung 82 entlang des Längsschlitzes 22 mit zwei Spannschrauben 7 ausgebildet, wobei jede der Schrauben primär zur Verspannung der Rohrschelle 10 auf je eines der Rohre 11 vorgesehen ist.

Im unteren Bereich der Figur ist eine Schnittdarstellung gezeigt, in welcher die Dichteinlage 25 innerhalb des Schellenbands 20 ersichtlich ist. Zwischen Schellenband 20 und der Dichteinlage 25 - bzw. optional auch zumindest teilweise in der Dichteinlage 25 und/oder dem Schellenband 20 eingebettet - befindet sich erfindungsgemäss der Drucksensor 30. Vorzugsweise ist dabei für jedes der zu verbindenden Rohre 11 jeweils zumindest ein Drucksensor 30 vorgesehen. Über eine kabelloses Kommunikationsmodul 42 der Schnittstelle 40 jeweils eines oder mehrerer Drucksensoren 30 wird zumindest ein Wert als Information über den mechanischen Spannungszustand in oder an der Dichteinlage 25 an eine externe, mobile Auswerteeinheit 50 bereitgestellt. Anhand dieser Information kann infolge die Spanneinrichtung 12 derart bedient werden, dass ein für diese Rohrkupplung und/oder für diesen Anwendungsfall erforderliche Spanndruck bzw. ein Spanndruck in einem gewünschten Spanndruckbereich erzielt wird. Dabei kann die Auswerteeinheit 50 zum Beispiel eine Anzeige 51 aufweisen, welche graphisch und/oder nummerische einen vom Kommunikationsmodul 42 empfangenen Wert des Spanndrucks oder einen davon abgeleiteten Wert anzeigt. Beispielsweise für jeden der Spannschrauben 7 einen zugehörigen Wert in einer physikalischen Einheit (oder dimensionslos, z.B. in Prozent) oder eine Angabe ob die Spannschraube 7 weiter zu spannen, zu belassen oder zu entspannen ist, um in einem zulässigen Bereich um den vorgegebenen Sollwert zu sein.

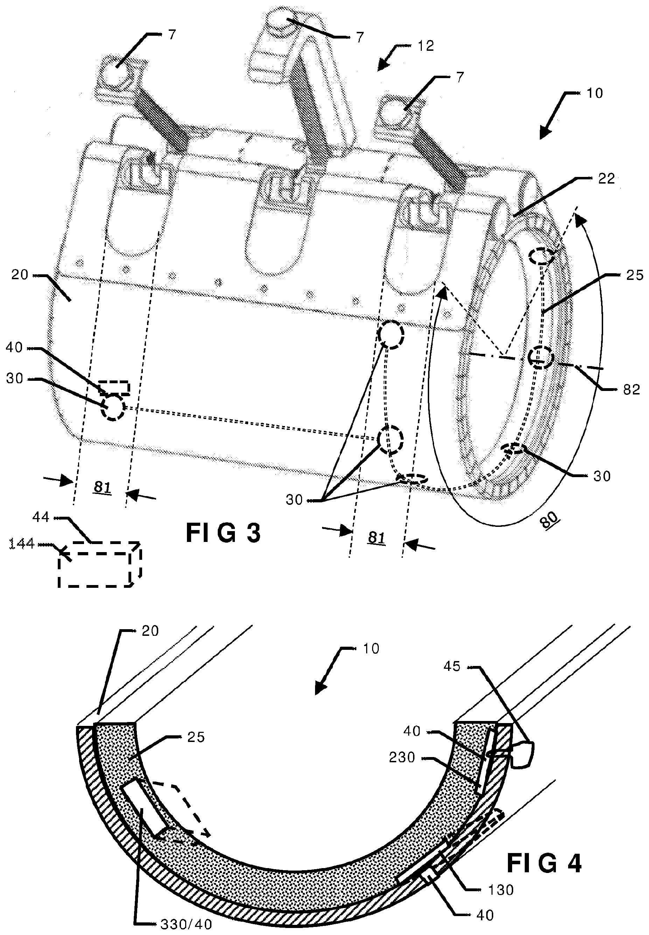

In Fig. 3 ist eine gattungsgemässe Ausführungsform mit einer Spanneinrichtung 12 mit mehr als zwei Spannschrauben 7 gezeigt, welche entsprechend einer bevorzugten Ausführungsform mit zumindest je einem Drucksensor 30 im axialen Endbereich der Rohrkupplung ausgebildet ist, z.B. jeweils etwa im äusseren Drittel. Diese sind in der Längsrichtung der Achse 82 der Rohrkupplung 10 jeweils in einem Bereich 81 angeordnet, welcher geometrisch bzw. physikalisch einer der Spannschrauben 7 bzw. einer an der Dichteinlage 25 ausgeformte Dichtlippe zugeordnet ist. Im Querschnitt der Rohrkupplung 10 sind die Drucksensoren 30 vorzugsweise ausserhalb eines Bereichs der Spannschrauben 7 angeordnet. Beispielsweise in dem hier mit gekennzeichneten Winkelbereichs 80 in Bezug auf den Längsschlitz 22 des Schellenbands 20. Besonders bevorzugt in einem Bereich, in welchem mit der schlechtesten Verspannwirkung der Dichteinlage 25 zu rechnen ist, da ein solcher Bereich oft auch die kritische Stelle für eine korrekte und hinreichend Verspannung der Rohrkupplung 10 ist. In einer hier nicht gezeigten Ausführungsform kann der Drucksensor 30 daher auch im Bereich der Spanneinrichtung 12 angeordnet sein, wenn dieser Bereich konstruktionsbeding jener mit der potentiell geringsten Anpressung der Dichteinlage 25 ist. Da eine Sensoranordnung im Bereich der Spanneinrichtung 12 konstruktiv anspruchsvoll sein kann, kann in einer anderen bevorzugten Ausführungsform auch ein Bereich von ca. 120° von der Spanneinrichtung 12 entfernt angestrebt werden - wie z.B. linksseitig in der Figur gezeigt.

Rechtsseitig ist in derselben Figur eine andere Ausführungsform gezeigt, bei welcher mehrere Drucksensoren 30 entlang des Umfangs des Schellenbands 20 angeordnet sind. Damit kann z.B. sichergestellt werden, ob entlang des Umfangs des Schellenbands 20 ein hinreichender Spanndruck vorhanden ist. Dabei kann eine einzelne Auswertung eines jeden Sensors 30 erfolgen, bei welcher entweder die Werte aller Sensoren 30 und/oder eine Kombination dieser Werte von der Rohrkupplung 10 bereitgestellt wird z.B. ein minimalster Wert des Spanndrucks, wobei beim Verspannen auch dieser Minimalwert einen Soll- bzw. Minimalwert erreichen muss. Alternativ kann auch eine zumindest teilweise kombinierte Auswertung erfolgen, z.B. in Form einer elektrischen parallel- oder Reihenschaltung mehrerer Drucksensoren 30.

Diese Drucksensoren 30 sind dabei zwischen dem Schellenband 20 und der Dichteinlage 25 oder auch zumindest teilweise in der Dichteinlage 25 angeordnet. Die Schnittstelle 40 zur Übertragung von Messwerten der Drucksensoren 30 ist in dieser Ausführungsform gemeinsam für mehrere der Drucksensoren 30 ausgebildet. In anderen Ausführungsformen kann auch jeder der Drucksensoren 30 eine eigene Schnittstelle 40 aufweisen, wobei diese auch eine Einheit bilden können, also beispielsweise jeweils als autonomes, einstückiges Bauteil ausgebildet und in der Rohrkupplung 10 verbaut sein können. Die Schnittstelle 40 ist dabei erfindungsgemäss Teil der Rohrkupplung 10 und stellt eine kabellose, vorzugsweise kontaktlose Kommunikation nach Ausserhalb der Rohrkupplung bereit.

Eine optionale andere Ausführungsform kann auch ein System mit einer drucksensorausgerüsteten Rohrkupplung 10 und einem anbringbaren Auswertemodul 144 - z.B. in Form eines Funk- oder Feldbusmoduls - ausgebildet sein. Dieses kann kontaktlos oder allenfalls auch über Kontakte 44 Werte vom Drucksensor 30 über eine Ausführungsform der Schnittstelle 40 auslesen und über ein Kommunikationssystem bereitstellen. Neben einer Benutzung eines solchen Auswertemoduls 144 zur temporären Anbringung nur für eine Verspannung der Rohrkupplung 10 kann ein solches auch dauerhaft an der Rohrkupplung angebracht werden um die Rohrkupplung 10in ein Mess- oder Überwachungssystem einzubinden. Dabei können unterschiedliche, austauschbare Auswertemodule 144 für verschieden Kommunikationsschnittstellen bereitgestellt werden.

Wie in Fig. 4 anhand von drei beispielhaften Ausführungsoptionen gezeigt, kann die Schnittstelle 40 dabei beispielsweise auch innerhalb der Rohrkupplung 10, also beispielsweise zwischen Schellenband 20 und der Dichteilage 25 oder zumindest teilweise im bzw. durch das Schellenband 20 angebracht sein. In einer Ausführungsform kann etwa der Drucksensor 30, z.B. als Foliendrucksensor 130, innen am Schellenband 20 aufgebracht, z.B. aufgeklebt sein und über Leitungen, z.B. über einen Folienleiter mit der Schnittstelle 40 verbunden sein. Die Schnittstelle 40 kann dabei auch innerhalb des Schellenbandes 20 und/oder wie gezeigt zumindest mit einem Teil seines Kommunikationsmoduls 42 auch durch das Schellenband 20 hindurchreichend ausgebildet sein.

In einer anderen Ausführungsform, hier alternativ mit einem Drucksensor 30 in Form eines Piezo-Drucksensor 230 dargestellt, kann alternativ z.B. eine Schlitzstruktur oder eine Ausnehmung im Schellenband 20 vorgesehen sein, welches ausgebildet ist eine elektromagnetische Kommunikation durch das Schellenband 20 zu ermöglichen oder zu verbessern. Die Ausnehmung kann speziell in Form eine Wellenkanals 45 ausgebildet sein, welcher bevorzugt auf die Kommunikationsfrequenz des Kommunikationsmoduls 42 ausgelegt ist. Ein solcher Wellenkanal 45 kann wie gezeigt radial oder alternativ auch seitlich aus der Rohrkupplung 10 austreten. Es kann auch ein Teil des Schellenbands 20 ausgestaltet und strukturiert sein, dass dieser eine Antennenstruktur für das Kommunikationsmodul 42 ausbildet.

In einer dritten, in derselben Figur dargestellten Alternative kann der Drucksensor 30, z.B. als kapazitiv messender Drucksensor 330, zumindest teilweise oder vollständig in der Dichteinlage 25 eingebettet ausgebildet sein, separiert oder kombiniert mit dem Kommunikationsmodul 40.

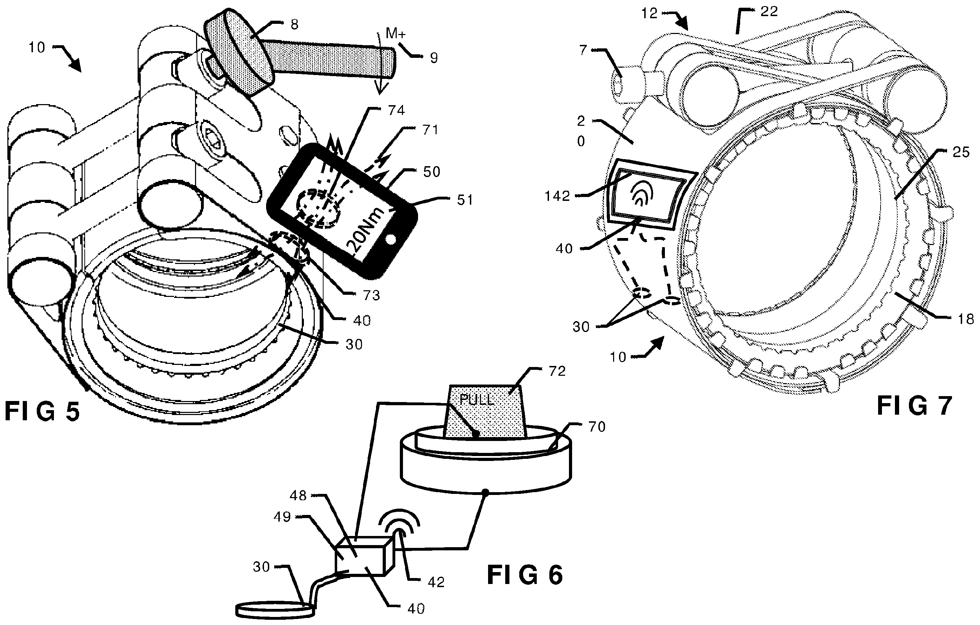

Fig. 5 stellt eine erfindungsgemässe Rohrkupplung 10 dar, welche gerade montiert und mit einem Werkzeug 8 verspannt wird. Dabei braucht es erfindungsgemäss nicht zwingen ein Werkzeug 8 in Form eines Drehmomentschlüssels, da die Rohrkupplung 10 mithilfe des Drucksensors 30 über die Schnittstelle 40 eine Information über ihren aktuellen Verspannungszustand bereitstellt, ohne dass ein Drehmoment 9 durch Werkzeug 8 ermittelt werden muss. Diese Information wird dabei Kabellos an eine Auswerteeinheit 50 bereitgestellt. Die von der Schnittstelle 40 zur Kommunikation benötigte elektrische Energie kann dabei ebenfalls Kabellos von extern, speziell direkt von der Auswerteeinheit 50 bereitgestellt werden. Im gezeigten Beispiel wird elektromagnetische Energie 71 von der Auswerteeinheit 50 emittiert und von der Schnittstelle 40 empfangen und zu ihrer Versorgung genutzt, vorzugsweise primär magnetisch, etwa wie gezeigt durch eine Antenne oder Spule 73 in der Rohrkupplung 10 und einer zur Auslesung mit dieser magnetisch gekoppelten Antenne oder Spule 74 in der Auswerteeinheit 50. Insbesondere können hierbei RFID (Radio Frequency identification), NFC (Near-Field Communication) oder ähnliche Technologien zum Einsatz kommen, insbesondere wenn diese sowohl einen Energietransfer 71 als auch einen Datentransfer, vorzugsweise über dieselbe kontaktlose Schnittstelle bereitstellen.

Die Auswerteeinheit 50 kann dabei vorzugsweise auch zugleich die Information 51 über die Verspannung optisch, akustisch und/oder haptisch über ein entsprechendes Interface 51 bereitstellen. Beispielsweise kann die Auswerteeinheit 50 in Form oder ähnlich zu einem Smartphone, Tablet-PC, Smartwatch oder Laptop ausgebildet sein, vorzugsweise mit einem integrierten oder anschliessbaren NFC- oder RFID-Modul. Bei geringer Reichweite der Kommunikationseinheit 42 kann die Rohrkupplung dabei auch ausgebildet sein, dass an dieser eine solche Auswerteeinheit 50 in einer bevorzugten Position in Bezug zur Schnittstelle 40 temporär anbringbar ist - bzw. kann auch eine entsprechende externe Halterung temporär angebracht werden. Neben einer mechanischen kann z.B. auch eine magnetische Anbringung und/oder Positionierung der Auswerteeinheit 50 oder eines Teils davon erfolgen.

In einer anderen Ausführungsform kann die Auswerteeinheit 50 alternativ oder zusätzlich eine Gateway-Funktion bereitstellen und die kabellos erhaltene Information über die Verspannung von der Schnittstelle 40 und dem oder den Drucksensoren 30 über eine andere kabellose oder kabelgebundene Schnittstelle weiterleiten, beispielsweise über Bluetooth, Wlan, ZigBee, NFC, Ethernet, Serielle Schnittstelle, Feldbussystem, etc.

Fig. 6 stellt alternativ oder zusätzlich zu oben beschriebener Fremdversorgung eine andere Ausführungsform der Energieversorgung der Schnittstelle 40, der Kommunikationseinheit 42 bzw. des Drucksensors 30 dar. Dabei weist die Rohrkupplung 10 eine interne Energiequelle 70 auf, welche vorzugsweise in die Rohrkupplung integriert ist, beispielsweise eine Batterie oder ein Akku. Um eine zu schnelle Batterie-Entladung zu vermeiden kann dabei ein Aktivierungselement 72 vorgesehen sein, welches erst kurz vor oder bei der Montage ausgelöst wird und welches erst dann eine Energieversorgung herstellt. Beispielsweise kann ein aus der Rohrkupplung 10 herausragender Isolierstreifen für die Batterie vom Monteur kurz vor der Montage abgezogen werden, sodass die Schnittstelle 40 und der Sensor 30 mit Energie versorgt werden und damit ein aktives oder abrufbasiertes Übertragen der Sensorwerte aktiviert wird. Alternativ zum Abziehen eines solchen Streifens kann die Energieversorgung z.B. auch durch die Montage selbst ausgelöst werden. Beispielsweise durch eine hier nicht im Detail dargestelltes Aktivierungselement, welches durch Betätigung der Spanneinrichtung 12 direkt oder indirekt, etwa durch die Reduktion des Innendurchmessers oder mit einem verbinden zweier Kontakte durch den Spanndruck in der Dichteinlage, etc. Damit kann die Energieversorgung entsprechend klein ausfallen und insbesondere derart ausgebildet sein, dass diese eine Versorgung im Wesentlichen nur für die Dauer des Verspann-Vorgangs bereitgestellt werden kann, also z.B. etliche Sekunden, einige Minuten, oder vielleicht Stunden, nicht jedoch über Jahre oder Monate hinweg. Alternativ kann auch Energy-Harvesting-Modul zur Nutzung von Umgebungsenergie in der Rohrkupplung vorhanden sein. Im Falle eines Akkus oder Kondensators kann dieser auch von extern aufladbar sein, beispielsweise mit einem System ähnlich wie zu Fig. 5 beschrieben.

Hier dargestellt ist auch das die Rohrkupplung, vorzugsweise in oder mit der Schnittstelle 40 verbunden, einen Temperatursensor 48 aufweise. Neben einer Messung und Bereitstellung der Temperatur an sich, kann damit auch eine Temperaturabhängige Kompensation der Messwerte des Drucksensors erfolgen. Auch kann die Schnittstelle 40 bzw. das Kommunikationsmodul 42 eine, vorzugsweise für jede Rohrschelle 10 eindeutige Kennung 49 (z.B. einer Seriennummer Produktionskennung, MAC-adresse, ...), speziell in digital auslesbarer und über die Kommunikationseinheit 42 bereitstellbar ist, insbesondre gemeinsam mit dem Wert vom Drucksensor, vorzugsweise mit einer veränderungssicheren kryptographischen Sicherung.

Wie in Fig. 7 gezeigt kann in einer Ausführungsform die Rohrkupplung 10 an der Aussenseite des Schellenbandes 20 eine Antenne des Kommunikationsmoduls 42 der Schnittstelle 40 aufweisen. Beispielsweise kann dies eine auf dem Schellenband aussen aufgebrachte, z.B. aufgeklebte, RFID- oder NFC-Transponderspule 142, eine Antennenspule in Form einer Folienantenne, eine flachen Patch-Antenne, etc. sein. Das Kommunikationsmodul 42 und oder die Schnittstelle 30 selbst kann dabei innerhalb oder Ausserhalb des Schellenbandes 20 angebracht und je nach dem entsprechend durch das Schellenband 20 elektrisch mit der Antenne oder dem Drucksensor 30 verbunden sein, welcher im Inneren des Schellenbands 20, speziell an oder in der Dichteinlage 25 liegt. Hierbei kann im Schellenband 20 ein entsprechendes Schutzteil oder eine Ausformung im Schellenband vorgesehen sein, welches die Schnittstelle 40 vor den Spanndrücken schützt. In einer anderen, hier nicht gezeigten Ausführung kann die Rohrkupplung 10 auch mit einem RFID-Transponder als Kommunikationsmodul 42 ausgebildet sein, z.B. ähnlich einer Ausführung nach ISO 15693, etwa in Form einer solchen Miniaturausführung, die in einem Loch im Schellenband 20 steckt.

In bevorzugten Ausführungen der Rohrkupplung 10 in dieser oder den anderen Figuren wird die, allenfalls einstückig oder mehrstückig ausgebildete Dichteinlage 25 bevorzugt von einem Verankerungselement 18 umfasst und gehalten. Dieses kann z.B. aus vielen einzelnen und in Umfangsrichtung nebeneinanderliegenden Elementen besteht und eine Übertragung der infolge von Innendruck bzw. von aussen auf die Rohre 11 einwirkenden Kräfte übernimmt. Bevorzugt liegt an den Stirnseiten der Dichteinlage 25 und innerhalb des stirnseitigen Endes des Verankerungselementes 18 zumindest eine Lamelle an und verläuft um das jeweilige Rohr 11 herum, um ein Hinausdrücken der Dichteinlage 25 bei Kraftbeaufschlagung zu verhindern. Gegebenenfalls könnte auch noch ein Gehäuse das Verankerungselement 18 und/oder die Lamellen umgeben.

Die gezeigte Spanneinrichtung 12 ist in dieser Ausführungsform als eine Tangential-Spannsystem mit sich überschneidenden Enden des Schellenbands 20 ausgebildet, welche den Längsschlitz 22 im Wesentlichen vermeidet bzw. minimiert und wie z.B. in EP 2839197 detailliert beschrieben. In dieser Ausführungsform ist nur eine einzige Spannschraube 7 erforderlich, jedoch wird vorzugsweise dennoch an beiden Seiten der Rohrkupplung 10 zumindest ein Drucksensor ausgebildet, wobei aber die Auswertung dieser Drucksensoren gemeinsam erfolgen kann, beispielsweise in Form eines Minimalwerts des Spanndrucks von den beiden Sensoren ober auch einer komplexeren Auswertung.

Für den Fachmann offensichtlich, können die hier in unterschiedlichen Figuren gezeigten bzw. beschriebenen Ausführungsformen und Ansätze im Sinne der Erfindung auch anders als gezeigt kombiniert und vertauscht werden, solange die resultierenden Merkmalskombinationen durch die Ansprüche abgedeckt werden.

### Bezugszeichenliste

- 7: Spannschraube
- 8: Spannwerkzeug
- 9: Spannmoment
- 10: Rohrkupplung bzw. Rohrschelle
- 11: Rohre
- 12: Spanneinrichtung
- 18: Verankerungsring
- 20: Schellenband
- 22: Längsschlitz
- 25: Dichteinlage
- 30: Drucksensor
- 130: Foliendrucksensor
- 230: Piezo-Sensor
- 330: Widerstands-Sensor
- 40: Schnittstelle
- 42: Kommunikationsmodul
- 142: RFID- oder NFC-Chip
- 44: Elektrische Kontakte zum Drucksensor
- 144: Abnehmbares Auswertemodul / Feldbusmodul
- 45: Wellenkanal
- 48: Temperatursensor
- 49: Kennung
- 50: Auswerteeinheit
- 51: Anzeige
- 70: Energiespeicher
- 71: Kabellose Energie- und/oder Daten-Übertragung
- 72: Aktivierungselement
- 73: Energieversorgungsmodul
- 74: Energieeinspeisemodul
- 80: Winkelbereich
- 81: Längenbereich
- 82: Axialrichtung

## Patentansprüche

1. Rohrkupplung (10) zum Verbinden zweier Rohre (11), beziehungsweise Rohrschelle (10) zum Abdichten eines defekten Rohrs (11), umfassend ein um das Rohr oder die Rohre (11) spannbares flexibles Schellenband (20),
eine Spanneinrichtung (12) zur Reduktion eines Innendurchmessers des Schellenbandes (20),
eine gummielastische Dichteinlage (25) an der Innenseite des Schellenbands (20), welche mittels der Spanneinrichtung (12) zum Erzeugen von radialen Spann-Druckkräften auf das Rohr oder die Rohre (11) unter Druck setzbar ist, umfassend
- einen, zwischen der Dichteinlage (25) und dem Schellenband angeordneten, elektrischen Drucksensor (30),
welcher ausgebildet ist, einen Wert eines mechanischen Spannungszustands in oder an der Dichteinlage (25) zu ermitteln, und
- einer Schnittstelle (40) vom Drucksensor zu einer externen Auswerteeinheit (50), welche ausgebildet ist, auf Basis des Werts des mechanischen Spannungszustands eine Information zur Bedienung der Spanneinrichtung (12) zur Herstellung eines Sollwerts der Druckkräfte bereitzustellen,
wobei die Schnittstelle (40) ein Kommunikationsmodul (42) umfasst, welches eine kabellose Kommunikation der durch den Drucksensor (30) gemessenen Werte zur Auswerteeinheit (50) bereitstellt.

2. Rohrkupplung (10) beziehungsweise Rohrschelle (10) nach Anspruch 1,
**dadurch gekennzeichnet, dass**
die Schnittstelle (40) und das Kommunikationsmodul (42) zwischen der Dichteinlage (25) und dem Schellenband (20) angeordnet sind, und das Schellenband (20) in einem Bereich des Kommunikationsmoduls (42) für die kabellose Kommunikation durch das Schellenband (20) hindurch ausgestaltet ist und dazu vorzugsweise einen Wellenkanal (45) in diesem Bereich des Schellenbands (20) aufweist.

3. Rohrkupplung (10) beziehungsweise Rohrschelle (10) nach einem der Ansprüche 1 oder 2, **dadurch gekennzeichnet, dass**
die Schnittstelle (40) mit einem Energieversorgungsmodul (73) derart ausgebildet ist, dass bei einem Auslesen des Werts aus dem Drucksensor (30) mittels externer Auswerteeinheit (50), das Energieversorgungsmodul (73) durch ein Energieeinspeisemodul (74) der externen Auswerteeinheit (50) mit elektromagnetischer bzw. elektrischer Energie versorgbar ist, vorzugsweise mittels kabelloser, induktiver oder kapazitiver Energieübertragung (71).

4. Rohrkupplung (10) beziehungsweise Rohrschelle (10) nach einem der Ansprüche 1 bis 3, **dadurch gekennzeichnet, dass**
die Schnittstelle (40) mit einem RFID-(Radio-Frequency IDentification) oder NFC- (Near Field Communication) Chip (142) ausgerüstet ist, welcher mit dem Drucksensor (30) verbunden und ebenso innerhalb des Schellenbands (20) angebracht ist.

5. Rohrkupplung (10) beziehungsweise Rohrschelle (10) nach einem der Ansprüche 1 bis 4, umfassend die externe Auswerteeinheit (50), die als ein tragbares, batteriebetriebenes Gerät ausgebildet ist,
vorzugsweise als Smartphone, Tablet-PC oder Laptop mit jeweils entsprechendem Computerprogrammprodukt zur Verarbeitung des Werts des mechanischen Spannungszustands aus dem Drucksensor (30) und darauf basierender Bereitstellung der Information über ein Interface (51) zur geführten Bedienung der Spanneinrichtung (12) zur Herstellung des Sollwerts der Druckkräfte.

6. Rohrkupplung (10) beziehungsweise Rohrschelle (10) nach einem der Ansprüche 1 bis 5, **dadurch gekennzeichnet, dass**
der Drucksensor (30) einen Energiespeicher (70) und/oder ein Aktivierungselement (72) aufweist, welche ausgebildet sind, nach einer Aktivierung des Aktivierungselements (72) bei einer Montage der Rohrkupplung (10) beziehungsweise Rohrschelle (10) wenigstens temporär während und/oder nach der Montage eine Energieversorgung der Schnittstelle (40) und/oder des Drucksensors (30) bereitzustellen, insbesondere wobei das Aktivierungselement (72) durch einen Vorgang bei der Montage automatisch auslösbar ist, vorzugsweise durch eine Betätigung der Spanneinrichtung (12) und/oder durch ein Aufbringen von Druckkräften auf die Dichteinlage (25).

7. Rohrkupplung (10) beziehungsweise Rohrschelle (10) nach einem der Ansprüche 1 bis 6, **dadurch gekennzeichnet, dass** der Drucksensor (30) als
- ein Foliendrucksensor (130), oder
- ein Piezo-Drucksensor (230), oder
- ein Sensor nach einem DMS-Messprinzip, oder
- ein Sensor nach dem Kohlegriess-Prinzip,
ausgebildet ist,
insbesondere wobei der Drucksensor (30) einen Messbereich für Druckkräfte in einem Bereich aufweist, der durch Anzugskräfte an der Spanneinrichtung (12) in der Höhe von 0 bis 200Nm erzeugt wird.

8. Rohrkupplung (10) beziehungsweise Rohrschelle (10) nach einem der Ansprüche 1 bis 7, **dadurch gekennzeichnet, dass**
der Drucksensor (30) oder die Schnittstelle (40) einen zusätzlichen Temperatursensor (48) aufweist, welcher ausgebildet ist, den gemessenen Druck-Wert entsprechend einer damit gemessenen Temperatur zu kompensieren.

9. Rohrkupplung (10) beziehungsweise Rohrschelle (10) nach einem der Ansprüche 1 bis 8, **dadurch gekennzeichnet, dass**
der Drucksensor (30) in einem Winkelbereich (80) des Schellenbands (20) angeordnet ist, welcher aussenhalb von zumindest +/-30 Grad um die Spanneinrichtung (12) angeordnet ist, vorzugsweise im Wesentlichen 120° gegenüber der Spanneinrichtung (12).

10. Rohrkupplung (10) beziehungsweise Rohrschelle (10) nach einem der Ansprüche 1 bis 9, **dadurch gekennzeichnet, dass**
mehr als ein Drucksensor (30) zwischen der Dichteinlage (25) und dem Schellenband (20) angeordnet sind, wobei vorzugsweise entlang einer Axialrichtung (82) der Rohrkupplung (10) jeweils zumindest ein Drucksensor (30) in jeweils einem, einer Spannschraube (7) der Spanneinrichtung (12) zugeordneten, Längen-Bereich (81) angeordnet ist.

11. Rohrkupplung (10) beziehungsweise Rohrschelle (10) nach einem der Ansprüche 1 bis 10, **dadurch gekennzeichnet, dass**
der Drucksensor (30) oder die Schnittstelle (40) eine für die Rohrkupplung (10) beziehungsweise Rohrschelle (10) eindeutige, elektronisch auslesbare Kennung (49) aufweist, insbesondere wobei eine digitale Signierung und/oder Verschlüsselung der Werte vom Drucksensor (30) auf Basis dieser Kennung (49) bereitgestellt wird, vorzugsweise in Form einer Blockchain,
insbesondere wobei der Wert aus dem Drucksensor (30) und die Kennung (49) mit wenigstens einer weiteren Information verknüpft bereitgestellt wird, welche weitere Information aus zumindest einer der nachfolgenden Angaben besteht:
Ort, Zeit, Monteur und/oder externe Auswerteeinheit (50), und dass während einer Auslesung des Werts diese Daten vorzugsweise als ein eindeutig und reproduzierbar verknüpftes Datenpaket bereitgestellt werden.

12. Verfahren zum Bereitstellen einer Information über ein korrektes Verspannen einer Rohrkupplung (10), insbesondere einer Rohrkupplung (10) beziehungsweise einer Rohrschelle (10), nach einem der Ansprüche 1 bis 11, mit
einem Messen eines elektrischen Werts aus dem Drucksensor(30), welcher von einer mechanischen Spannung in oder an einer Dichteinlage (25) unter einem Schellenband (20) der Rohrkupplung (10) beziehungsweise Rohrschelle (10) abhängt,
einem Bereitstellen des Werts oder einem davon abgeleiteten Wert über eine Schnittstelle (40) zu einem Kommunikationsmodul (42) der Rohrkupplung (10),
einem kabellosen Kommunizieren des Werts oder einem davon abgeleiteten Wert zu einer externen Auswerteeinheit (50), welche ausgebildet ist, auf Basis des Werts oder einem davon abgeleiteten Wert eine Information zur Bedienung einer Spanneinrichtung (12) der Rohrkupplung (10) beziehungsweise Rohrschelle (10) bereitzustellen, mit welcher Bedienung ein Sollwert eines Spanndrucks der Rohrkupplung (10) beziehungsweise Rohrschelle (10) erzielbar ist.

13. Verfahren nach Anspruch 12, **dadurch gekennzeichnet, dass** im Rahmen des kabellosen Kommunizierens ein Empfangen von elektrischer Energie von der externen Auswerteeinheit (50) erfolgt, mit welcher Energie das Kommunikationsmodul (42) versorgt wird, und/oder das kabellose Kommunizieren mit einem RFID- (Radio-Frequency IDentification) oder NFC- (Near Field Communication) Transponder in der Rohrkupplung (10), insbesondere innerhalb des Schellenbands (20) erfolgt.

14. Verfahren nach einem der Ansprüche 12 bis 13, **gekennzeichnet, durch**
ein Dokumentieren des Werts oder einem davon abgeleiteten Wert durch die externe Auswerteeinheit (50), insbesondere mit Erfassen von Umgebungsbedingungen, wie einer elektronisch auslesbaren Kennung der Rohrkupplung (10) beziehungsweise Rohrschelle (10) und/oder zumindest einer Angabe von Temperatur/Zeit/Ort/Arbeiter/etc., vorzugsweise mit einem Signieren und/oder Verschlüsseln der Daten, insbesondere in einer Blockchain, und/oder **gekennzeichnet, durch** ein erneutes kabelloses Kommunizieren und ein Validieren der Information über ein korrektes Verspannen einer Rohrkupplung (10) beziehungsweise Rohrschelle (10) im Rahmen einer Inspektion und/oder Instandhaltung der Rohrkupplung (10) zu einem Zeitpunkt deutlich nach der ursprünglichen Montage der Rohrkupplung (10) beziehungsweise der Rohrschelle (10).

15. Computerprogrammprodukt mit Programmcode auf einem maschinenlesbaren Medium, welcher ausgebildet ist, dass eine Vorrichtung umfassend
eine Rohrkupplung (10) beziehungsweise Rohrschelle (10) nach einem der Ansprüche 1 bis 11 und
eine damit verbundene externe Auswerteeinheit (50)
die Verfahrensschritte nach einem der Ansprüche 12 bis 14 ausführt.

## Claims

1. A pipe coupling (10) for connecting two pipes (11), or a pipe clamp (10) for sealing a defective pipe (11), comprising
a flexible clip-on strap (20) that can be tightened around the pipe or the pipes (11),
a clamping device (12) for reducing an inner diameter of the clip-on strap (20),
a rubber-elastic sealing insert (25) on the interior side of the clip-on strap (20),
which can be pressurized by means of the clamping device (12) for generating radial clamping forces on the pipe or the pipes (11), comprising
- an electric pressure sensor (30) arranged between the sealing insert (25) and the clip-on strap,
which is designed to determine a value of a mechanical clamping state in or on the sealing insert (25), and
- an interface (40) from the pressure sensor to an external evaluation unit (50), which is designed, based on the value of the mechanical clamping state, to provide information for operating the clamping device (12) for generating a desired value for the compressive force,
wherein the interface (40) comprises a communication module (42) which provides a wireless communication of the values measured by the pressure sensor (30) to the evaluation unit (50).

2. The pipe coupling (10) or pipe clamp (10) according to claim 1,
**characterized in that**
the interface (40) and the communication module (42) are arranged between the sealing insert (25) and the clip-on strap (20), and the clip-on strap (20) in an area of the communication module (42) is designed for wireless communication through the clip-on strap (20), and for this purpose preferably has a wave channel (45) in this area of the clip-on strap (20).

3. The pipe coupling (10) or pipe clamp (10) according to one of claims 1 or 2,
**characterized in that**
the interface (40) with a power supply module (73) is designed in such a way that, when reading out the value from the pressure sensor (30) by means of an external evaluation unit (50), the power supply module (73) can be supplied with electromagnetic or electric energy by a power feed-in module (74) of the external evaluation unit (50), preferably through wireless, inductive or capacitive power transmission (71).

4. The pipe coupling (10) or pipe clamp (10) according to one of claims 1 to 3,
**characterized in that**
the interface (40) is equipped with an RFID (Radio Frequency IDentification) or NFC (Near Field Communication) chip (142), which is connected with the pressure sensor (30) and likewise secured inside of the clip-on strap (20).

5. The pipe coupling (10) or pipe clamp (10) according to one of claims 1 to 4, comprising the external evaluation unit (50), which is designed as a portable, battery-operated device, preferably as a Smartphone, tablet PC or laptop each with a corresponding computer program product for processing the value of the mechanical stress state from the pressure sensor (30) and providing information based thereupon about an interface (51) for the guided operation of the clamping device (12) for calculating the target value of the compressive forces.

6. The pipe coupling (10) or pipe clamp (10) according to one of claims 1 to 5,
**characterized in that**
the pressure sensor (30) has an energy storage system (70) and/or an activation element (72), which are designed, once the activation element (72) has been activated while assembling the pipe coupling (10) or pipe clamp (10), to provide an energy supply to the interface (40) and/or the pressure sensor (30) at least temporarily during and/or after assembly, in particular wherein the activation element (72) can be automatically actuated by a process during assembly, preferably by activating the clamping device (12) and/or by applying compressive forces to the sealing insert (25).

7. The pipe coupling (10) or pipe clamp (10) according to one of claims 1 to 6, **characterized in that** the pressure sensor (30) is designed as
- a film pressure sensor (130), or
- a piezoelectric pressure sensor (230), or
- a sensor according to a DMS measurement principle, or
- a sensor according to the carbon granule principle,
in particular wherein the pressure sensor (30) has a measurement range for compressive forces in a range that is generated by traction forces on the clamping device (12) of 0 to 200 Nm.

8. The pipe coupling (10) or pipe clamp (10) according to one of claims 1 to 7, **characterized in that**
the pressure sensor (30) or the interface (40) have an additional temperature sensor (48), which is designed to compensate for the measured pressure value according to a temperature measured therewith.

9. The pipe coupling (10) or pipe clamp (10) according to one of claims 1 to 8, **characterized in that**
the pressure sensor (30) is arranged in an angular range (80) of the clip-on strap (20) which is outside of at least +/- 30 degrees around the clamping device (12), preferably essentially 120° in relation to the clamping device (12).

10. The pipe coupling (10) or pipe clamp (10) according to one of claims 1 to 9, **characterized in that**
more than one pressure sensor (30) is arranged between the sealing insert (25) and the clip-on strap (20), wherein at least one respective pressure sensor (30) is arranged in a respective length range (81) allocated to a clamping screw (7) of the clamping device (12), preferably along an axial direction (82) of the pipe coupling (10).

11. The pipe coupling (10) or pipe clamp (10) according to one of claims 1 to 10, **characterized in that**
the pressure sensor (30) or the interface (40) has a clear, electronically readable identifier (49) for the pipe coupling (10) or pipe clamp (10), in particular wherein a digital signature and/or encryption of the values from the pressure sensor (30) is provided based on this identifier (49), preferably in the form of a blockchain,
in particular wherein the value from the pressure sensor (30) and the identifier (49) is provided while linked with at least one additional piece of information, wherein this additional piece of information consists of at least one of the following indications:
location, time, installer and/or external evaluation unit (50), and that, while reading out the value, these data are preferably provided as a clear and reproducibly linked data packet.

12. A method for providing a piece of information about a correct tightening of a pipe coupling (10), in particular a pipe coupling (10) or a pipe clamp (10), according to one of claims 1 to 11, which includes
measuring an electric value from a pressure sensor (30), which depends on a mechanical stress in or on a sealing insert (25) under a clip-on strap (20) of the pipe coupling (10) or pipe clamp (10),
providing the value or a value derived therefrom via an interface (40) to a communication module (42) of the pipe coupling (10),
wirelessly communicating the value or a value derived therefrom to an external evaluation unit (50), which is designed, based on the value or a value derived therefrom, to provide a piece of information for operating a clamping device (12) of the pipe coupling (10) or pipe clamp (10), which when operated can achieve a target value of a clamping pressure of the pipe coupling (10) or pipe clamp (10).

13. The method according to claim 12, **characterized in that**
electric energy is received from the external evaluation unit (50) within the framework of wireless communication, wherein this energy supplies the communication module (42),
and/or wireless communication takes place with an RFID (Radio Frequency IDentification) or NFC (Near Field Communication) transponder in the pipe coupling (10), in particular within the clip-on strap (20).

14. The method according to one of claims 12 to 13, **characterized by**
a documentation of the value or a value derived therefrom by the external evaluation unit (50), in particular along with the acquisition of environmental conditions, such as an electronically readable identifier of the pipe coupling (10) or pipe clamp (10) and/or at least one indication of temperature/time/location/worker/etc., preferably with a signature and/or encryption of the data, in particular in a blockchain, and/or **characterized by** a renewed wireless communication and a validation of the information via a correct clamping of a pipe coupling (10) or pipe clamp (10) within
the framework of an inspection and/or maintenance of the pipe coupling (10) at a point in time well after the original installation of the pipe coupling (10) or pipe clamp (10).

15. A computer program product with program code on a machine-readable medium, which is designed to have the procedural steps according to one of claims 12 to 14 be performed by a device comprising a pipe coupling (10) or pipe clamp (10) according to one of claims 1 to 11 and an external evaluation unit (50) connected thereto.

## Revendications

1. Raccord de tuyau (10), destiné à connecter deux tuyaux (11), plus particulièrement collier de serrage (10), destiné à assurer l'étanchéité d'un tuyau (11) défectueux, comprenant
une bande de collier (20) souple, susceptible d'être serrée autour du tuyau ou des tuyaux (11),
un dispositif de serrage (12), destiné à réduire un diamètre intérieur de la bande de collier (20),
un insert d'étanchéité (25) à élasticité caoutchouteuse sur la face intérieure de la bande de collier (20),
lequel est susceptible d'être mis sous pression au moyen du dispositif de serrage (12), pour exercer des forces radiales de serrage / de pression sur le tuyau ou sur les tuyaux (11), comprenant
- un capteur de pression (30) électrique, placé entre l'insert d'étanchéité (25) et la bande de collier,
lequel est conçu, pour déterminer une valeur d'un état de tension mécanique dans ou sur l'insert d'étanchéité (25) et
- une interface (40) du capteur de pression vers une unité d'évaluation (50) externe, laquelle est conçue pour mettre à disposition sur la base de la valeur de l'état de tension mécanique une information pour la manipulation du dispositif de serrage (12), afin d'établir une valeur de consigne,
l'interface (40) comprenant un module de communication (42), lequel met à disposition une communication sans fil des valeurs mesurées par le capteur de pression (30) vers l'unité d'évaluation (50).

2. Raccord de tuyau (10), plus particulièrement collier de serrage (10) selon la revendication 1,
**caractérisé en ce que**
l'interface (40) et le module de communication (42) sont placés entre l'insert d'étanchéité (25) la bande de collier (20) et dans une zone du module de communication (42), la bande de collier (20) est conçue pour la communication sans fil à travers la bande de collier (20) et comporte à cet effet de préférence un canal d'ondes (45) dans ladite zone de la bande de collier (20).

3. Raccord de tuyau (10), plus particulièrement collier de serrage (10) selon l'une quelconque des revendications 1 ou 2,
**caractérisé en ce que**
l'interface (40) est conçue avec un module (73) d'alimentation d'énergie, de telle sorte que lors d'une lecture de la valeur issue du capteur de pression (30), au moyen de l'unité d'évaluation (50) externe, le module (73) d'alimentation d'énergie soit susceptible d'être alimenté en énergie électromagnétique ou électrique par un module (74) d'injection d'énergie de l'unité d'évaluation (50) externe, de préférence au moyen d'une transmission d'énergie (71) sans fil, inductive ou capacitive.

4. Raccord de tuyau (10), plus particulièrement collier de serrage (10) selon l'une quelconque des revendications 1 à 3,
**caractérisé en ce que**
l'interface (40) est équipée d'une puce (142) RFID-(Radio-Frequency IDentification) ou NFC (Near Field Communication), laquelle est connectée avec le capteur de pression (30) et est aussi bien montée à l'intérieur de la bande de collier (20).

5. Raccord de tuyau (10), plus particulièrement collier de serrage (10) selon l'une quelconque des revendications 1 à 4, comprenant l'unité d'évaluation (50) externe, qui est conçue sous la forme d'un appareil portable, fonctionnant sur batterie, de préférence sous la forme d'un smartphone, d'un PC tablette ou d'un PC portable, doté respectivement d'un produit de programme informatique correspondant, pour le traitement de la valeur de l'état de tension mécanique issue du capteur de pression (30) et pour la mise à disposition sur cette base de l'information par l'intermédiaire d'une interface (51) pour la manipulation guidée du dispositif de serrage (12), afin d'établir la valeur de consigne des forces de pression.

6. Raccord de tuyau (10), plus particulièrement collier de serrage (10) selon l'une quelconque des revendications 1 à 5,
**caractérisé en ce que**
le capteur de pression (30) comporte un accumulateur d'énergie (70) et / ou un élément d'activation (72), lesquels sont conçus, après une activation de l'élément d'activation (72) lors d'un montage du raccord de tuyau (10), plus particulièrement du collier de serrage (10) pour mettre à disposition au moins temporairement pendant et /ou après le montage une alimentation en énergie de l'interface (40) et / ou du capteur de pression (30), notamment l'élément d'activation (72) étant automatiquement déclenchable lors d'une opération pendant le montage, de préférence par un actionnement du dispositif de serrage (12) et / ou par une application de forces de pression sur l'insert d'étanchéité (25).

7. Raccord de tuyau (10), plus particulièrement collier de serrage (10) selon l'une quelconque des revendications 1 à 6, **caractérisé en ce que**
le capteur de pression (30) est conçu sous la forme
- d'un capteur de pression sur film (130) ou
- d'un capteur de pression piézoélectrique (230) ou
- d'un capteur selon un principe de mesure DMS ou
- d'un capteur selon le principe des granulés de carbone,
notamment le capteur de pression (30) présentant une plage de mesure pour des forces de pression dans une plage qui est établie par des couples de serrage sur le dispositif de serrage (12) d'un montant de 0 à 200 Nm.

8. Raccord de tuyau (10), plus particulièrement collier de serrage (10) selon l'une quelconque des revendications 1 à 7, **caractérisé en ce que** le capteur de pression (30) ou l'interface (40) présente un capteur de température (48) supplémentaire, lequel est conçu pour compenser la valeur de pression mesurée en fonction d'une température mesurée avec l'aide de celui-ci.

9. Raccord de tuyau (10), plus particulièrement collier de serrage (10) selon l'une quelconque des revendications 1 à 8, **caractérisé en ce que**
le capteur de pression (30) est placé dans une zone angulaire (80) de la bande de collier (20, laquelle est placée à l'extérieur d'au moins + / - 30 degrés autour du dispositif de serrage (12), de préférence à 120 ° par rapport au dispositif de serrage (12).

10. Raccord de tuyau (10), plus particulièrement collier de serrage (10) selon l'une quelconque des revendications 1 à 9, **caractérisé en ce que**
plus d'un capteur de pression (30) sont placés entre l'insert d'étanchéité (25) et la bande de collier (20), de préférence le long d'une direction axiale (82) du raccord de tuyau (10) étant placé respectivement au moins un capteur de pression (30) dans respectivement une zone de longueur (81) affectée à une vis de serrage (7) du dispositif de serrage (12).

11. Raccord de tuyau (10), plus particulièrement collier de serrage (10) selon l'une quelconque des revendications 1 à 10, **caractérisé en ce que**
le capteur de pression (30) ou l'interface (40) présente une identification (49) électroniquement lisible, univoque pour le raccord de tuyau (10), plus particulièrement le collier de serrage (10), notamment une signature numérique et / ou un cryptage des valeurs du capteur de pression (30) étant mis(e) à disposition sur la base de ladite identification (49), de préférence sous la forme d'une chaîne de blocs,
notamment la valeur issue du capteur de pression (30) et l'identification (49) étant mis à disposition en association avec au moins une information supplémentaire, laquelle information supplémentaire est constituée d'au moins l'une des indications suivantes :
le lieu, l'heure, le monteur et / ou l'unité d'évaluation (50) externe et **en ce que** pendant une lecture de la valeur, lesdites données sont mises à disposition de préférence sous la forme d'un paquet de données associé de manière univoque et reproductible.

12. Procédé, destiné à mettre à disposition une information concernant une mise en tension correcte d'un raccord de tuyau (10), notamment d'un raccord de tuyau (10) plus particulièrement d'un collier de serrage (10), selon l'une quelconque des revendications 1 à 11, comportant
une mesure d'une valeur électrique issue du capteur de pression (30), laquelle dépend d'une tension mécanique dans ou sur un insert d'étanchéité (25) sous une bande de collier (20) du raccord de tuyau (10), plus particulièrement du collier de serrage (10),
une mise à disposition de la valeur ou d'une valeur qui en est dérivée par l'intermédiaire d'une interface (40) vers un module de communication (42) du raccord de tuyau (10),
une communication sans fil de la valeur ou d'une valeur qui en est dérivée vers une unité d'évaluation (50) externe, laquelle est conçue pour mettre à disposition, sur la base de la valeur ou d'une valeur qui en est dérivée une information pour la manipulation d'un dispositif de serrage (12) du raccord de tuyau (10), plus particulièrement du collier de serrage (10), avec laquelle manipulation une valeur de consigne d'une pression de serrage du raccord de tuyau (10), plus particulièrement du collier de serrage (10) peut être obtenue.

13. Procédé selon la revendication 12, **caractérisé en ce que**
dans le cadre de la communication sans fil, il s'effectue une réception d'énergie électrique de la part de l'unité d'évaluation (50) externe, avec laquelle énergie le module de communication (42) est alimenté,
et / ou **en ce que** la communication sans fil s'effectue dans le raccord de tuyau (10), notamment à l'intérieur de la bande de collier (20) à l'aide d'un transpondeur RFID (Radio-Frequency IDentification) ou NFC (Near Field Communication).

14. Procédé selon l'une quelconque des revendications 12 à 13, **caractérisé par**
une documentation de la valeur ou d'une valeur qui en est dérivée par l'unité d'évaluation (50) externe, notamment avec détection de conditions environnantes, comme une identification électroniquement lisible du raccord de tuyau (10), plus particulièrement du collier de serrage (10) et / ou une indication de température / d'heure / de lieu / de travailleur / etc., de préférence avec une signature et / ou un cryptage des données, notamment dans un bloc de chaînes, et / ou **caractérisé par**
une nouvelle communication sans fil et une validation de l'information concernant une mise en tension correcte d'un raccord de tuyau (10), plus particulièrement d'un collier de serrage (10) dans le cadre d'une inspection
et / ou une maintenance du raccord de tuyau (10) à un moment nettement postérieur au montage initial du raccord de tuyau (10), plus particulièrement du collier de serrage (10).

15. Produit de programme informatique, doté d'un code de programme sur un support lisible par ordinateur, lequel est conçu de sorte qu'un dispositif comprenant un raccord de tuyau (10), plus particulièrement un collier de serrage (10) selon l'une quelconque des revendications 1 à 11 et une unité d'évaluation (50) externe connectée avec celui-ci exécute les étapes de procédé selon l'une quelconque des revendications 12 à 14.
